# EUROPÄISCHE PATENTSCHRIFT

(11) **EP 4 150 304 B1**
(45) Veröffentlichungstag und Bekanntmachung des Hinweises auf die Patenterteilung: **09.10.2024**
(21) Anmeldenummer: 21723108.3
(22) Anmeldetag: 26.04.2021
(51) Int. Cl.: G01G 11/04

(54) **VERFAHREN ZUR BESTIMMUNG DER SCHÜTTDICHTE VON SCHÜTTGUT IN EINEM MOBILEN BRECHER**
METHOD FOR DETERMINING THE BULK DENSITY OF BULK MATERIAL IN A MOBILE BREAKER
PROCÉDÉ POUR DETERMINER LA DENSITÉ DE MATÉRIEL EN VRAC DANS UN BRISEUR MOBILE

(30) Priorität: 13.05.2020 AT 504242020
(43) Veröffentlichungstag der Anmeldung: 22.03.2023
(73) Patentinhaber: Rubble Master HMH GmbH, 4030 Linz (AT)
(72) Erfinder: HINTERDORFER, Christian, 4293 Gutau (AT); HINTERREITER, Christian, 4593 Obergrünburg (AT)
(74) Vertreter: Hübscher & Partner Patentanwälte GmbH
(86) Internationale Anmeldenummer: PCT/AT2021/060141
(87) Internationale Veröffentlichungsnummer: WO 2021/226644

(56) Entgegenhaltungen:
- WO-A1-01/19165
- CN-A- 108 267 201

## Beschreibung

### Technisches Gebiet

Die Erfindung bezieht sich auf ein Verfahren zur Bestimmung der Schüttdichte von Schüttgut in einem mobilen Brecher wobei das Schüttgutvolumen von auf ein Förderband aufgegebenem Schüttgut bestimmt wird nach Anspruch 1.

### Stand der Technik

Aus dem Stand der Technik sind viele Methoden bekannt, das Gewicht von Schüttgut auf einem Förderband entweder direkt über Waagen, oder indirekt aus dem Schüttgutvolumen zu messen. Die Anwendung üblicher Bandwaagen zur direkten Messung des Gewichtes ist allerdings bei mobilem Einsatz schwierig, da sich die Betriebstemperatur, Neigung des Förderbandes, Viskosität des Schmiermittels, etc. aufgrund der Umweltbedingungen oft ändert, wodurch solche Systeme häufig kalibriert werden müssen. Allerdings ist die Bestimmung des Gewichtes auch über das Volumen möglich. Die WO2017093609A1 offenbart ein Verfahren zur Bestimmung des Schüttgutgewichtes auf einem Förderband mithilfe eines Abtastsystems, welches ein dreidimensionales Profil des Schüttgutes ermittelt. Aus diesem dreidimensionalen Profil wird das Volumen des Schüttgutes erfasst und zusammen mit einer konstanten, vorher bekannten Dichte des Schüttgutes das Gewicht bestimmt. Das Dokument WO 01/19165 A1 offenbart ein Verfahren zum Ermitteln des Feuchtigkeitsgehalts von Schüttgut, insbesondere Wachstumssubstrat wie beispielsweise Topferde, wobei das Volumen einer Schüttgutmenge ermittelt wird, das Gewicht der Schüttgutmenge ermittelt wird und dann die spezifische Dichte aus dem Volumen und dem Gewicht ermittelt wird.

Nachteilig am Stand der Technik ist allerdings, dass auch die Volumenbestimmung empfindlich gegenüber Umweltbedingungen ist, da die Sensoren sehr sensibel bezüglich Störeinflüssen, wie beispielsweise Staub oder Wassertropfen, sind. Dies erschwert das kontinuierliche Ermitteln der Förderparameter wie dem Schüttgutgewicht, Schüttgutvolumen, sowie daraus abgeleiteter Größen wie beispielsweise der Fördermenge pro Stunde. Darüber hinaus muss die Dichte des Schüttgutes bekannt und konstant sein, um langfristig zuverlässige Messwerte zu erhalten.

### Darstellung der Erfindung

Der Erfindung liegt somit die Aufgabe zugrunde, über eine längere Betriebsdauer eines mobilen Brechers auch bei variierender Schüttgutdichte zuverlässig Schüttgutgewicht und Schüttgutvolumen bestimmen zu können.

Die Erfindung löst die gestellte Aufgabe dadurch, dass in aufeinanderfolgenden Zeitschritten sowohl das Schüttgutvolumen als auch das Schüttgutgewicht eines Förderbandabschnittes erfasst und aus dem Quotienten des Schüttgutgewichtes und des Schüttgutvolumens die Schüttdichte bestimmt wird. Der Erfindung liegt dabei die Überlegung zugrunde, dass die Schüttgutdichte des aufgegebenen Schüttgutes im Normalbetrieb bekannt ist. Dennoch wird die Schüttgutdichte über die parallele Ermittlung des Schüttgutgewichts und des Schüttgutvolumens laufend während des Betriebs bestimmt und als Kontroll- und Korrekturwert für die ordnungsgemäße Bestimmung des Schüttgutgewichtes eingesetzt. Ändern sich also die Messbedingungen dergestalt, dass entweder die Ermittlung des Schüttgutgewichtes oder des Schüttgutvolumens beeinträchtigt ist, kann die Schüttgutdichte entweder aufgrund fehlender Messdaten temporär nicht mehr bestimmt werden, oder ihr Wert weicht von der bekannten Schüttdichte ab, wodurch ein solches Ereignis sofort erkannt werden kann. Die Erfassung des Schüttgutvolumens kann beispielsweise mit einem optischen Abtastsystem bestimmt werden und das Schüttgutgewicht kann beispielsweise mit einer Leistungswaage erfolgen.

Sollte die Schüttdichte des Schüttgutes nicht exakt bekannt sein, lässt sich unter Umständen nicht ermitteln, ob und welche Messwerte fehlerhaft sind, da kein Referenzwert zur Beurteilung der gemessenen Gewichte und Volumina vorliegt. Das Verfahren kann allerdings auch bei unbekanntem Referenzwert für die Schüttdichte verwendet werden, wenn aus den Schüttdichten vorangegangener Zeitschritte ein Schüttdichtenmittelwert gebildet wird und beim Überschreiten eines Differenzbetrags zwischen Schüttdichte und Schüttdichtenmittelwert ein Störsignal ausgegeben wird. Dabei wird davon ausgegangen, dass die Bestimmung von Schüttgutvolumen und Schüttgutgewicht eine vorgegebene Anzahl von Zeitschritten vor Ausgabe des Störsignals ordnungsgemäß erfolgte, kann aus den zu diesen Zeitschritten bestimmten Schüttdichten ein Schüttdichtenmittelwert gebildet werden, der für die Prüfung herangezogen wird. Damit steht ein laufend während des Betriebs angepasster Referenzwert für die Schüttdichte zur Verfügung, sodass der für die Ausgabe eines Störsignals erforderliche Differenzbetrag klein gehalten werden kann. Dieses Störsignal kann, beispielsweise über ein Drahtlosnetzwerk, an den Benutzer übermittelt werden. Um zu überprüfen, ob die Gewichts- und die Volumenbestimmung ordnungsgemäß funktionieren, können beispielsweise vor dem eigentlichen Betrieb Referenzfahrten mit vermessenem Schüttgut durchgeführt werden.

Beispielsweise kann eine Betriebstemperatur - oder Standortänderung des Brechers oder am Förderband verklemmtes Schüttgut die Vergleichbarkeit der Messdaten verschlechtern oder zu Messfehlern führen. Ein fehlerhaftes Ermitteln des Schüttgutgewichts kann bei Ausgabe des Störsignals in diesem Fall jedoch korrigiert werden, indem für jeden Zeitschritt wenigstens eine Messzustandsgröße des Förderbandes ermittelt und im Falle eines Störsignals bei gegenüber den letzten Zeitschritten abweichender Messzustandsgröße des Förderbandes aus dem Schüttgutvolumen und dem Schüttdichtenmittelwert ein korrigiertes Schüttgutgewicht bestimmt wird. Messzustandsgrößen sind diejenigen Größen, die die Bestimmung des Schüttgutgewichtes beeinflussen können, wie beispielsweise Neigung und Geschwindigkeit, Betriebstemperatur, Orientierung oder Standort des Förderbandes sowie die Plausibilität der Messsignale. Durch eine standortswechselbedingte Änderung der Neigung und/oder einer Änderung der Geschwindigkeit des Förderbandes ändert sich nämlich die vertikal wirkende Kraftkomponente, sodass bei gleicher Masse ein geringeres Schüttgutgewicht gemessen wird. Bei einer Änderung der Betriebstemperatur, Orientierung oder des Standortes kann es aufgrund der komplexen Mechanik des Förderbandes ebenfalls zu geänderten Messbedingungen kommen. Eine Veränderung des Standortes kann in einfacher Weise beispielsweise dadurch festgestellt werden, indem die Betätigung des Fahrwerks als Messzustandsgröße verwendet wird. Darüber hinaus können die Messsignale für das Schüttgutgewicht auf ihre Plausibilität hin geprüft werden und auf diese Weise beispielsweise Übertragungs- oder andere Systemfehler bei der Bestimmung des Schüttgutgewichts ermittelt werden. Bei Ausgabe eines Störsignals kann das Produkt aus dem Schüttdichtenmittelwert und dem Schüttgutvolumen als korrigiertes Schüttgutgewicht herangezogen werden. Um nach einer Änderung einer Messzustandsgröße des Förderbandes das gemessene Schüttgutgewicht weiterhin heranziehen zu können, wird vorgeschlagen, dass aus dem Schüttgutgewicht vor Ausgabe des Störsignals und dem Schüttgutgewicht nach Ausgabe des Störsignals ein Korrekturterm bestimmt und auf die Schüttgutgewichte nach Ausgabe des Störsignals angewendet wird. Zur exakteren Ermittlung des Korrekturterms kann das Schüttgutgewicht vor Ausgabe des Störsignals und das Schüttgutgewicht nach Ausgabe des Störsignals durch Bildung des Mittelwerts aus Schüttgutgewichten mehrerer Zeitschritte gewonnen werden.

Analog dazu kann ein fehlerhaftes Ermitteln des Schüttgutvolumens bei Ausgabe des Störsignales einfach korrigiert werden, indem für jeden Zeitschritt wenigstens eine Messzustandsgröße des Förderbandes ermittelt und im Falle eines Störsignals bei gegenüber den letzten Zeitschritten gleichbleibender Messzustandsgröße des Förderbandes aus dem Schüttgutgewicht und dem Schüttdichtenmittelwert ein korrigiertes Schüttgutvolumen bestimmt wird. Als Messzustandsgrößen können die oben beschriebenen herangezogen werden, die die Bestimmung des Schüttgutgewichts beeinflussen können. Dadurch, dass die Messung des Schüttgutvolumens aufgrund der auftretenden Staubentwicklung im Betrieb störanfälliger als die Messung des Schüttgutgewichts ist, kann für den Fall, dass keine Änderung der Messzustandsgröße auftritt, davon ausgegangen werden, dass die Änderung der Schüttdichte aus fehlerhaften Messungen des Schüttgutvolumens resultiert. Bei Ausgabe eines Störsignals kann der Quotient aus dem Schüttgutgewicht und dem Schüttdichtenmittelwert als korrigiertes Schüttgutvolumen herangezogen werden.

Aussagekräftige Messwerte lassen sich langfristig ermitteln, indem je Zeitschritt das Schüttgutvolumen und das Schüttgutgewicht aufgezeichnet wird und dass für die Zeitschritte, bei denen ein Störsignal ausgegeben wurde, das korrigierte Schüttgutvolumen als Schüttgutvolumen und/oder das korrigierte Schüttgutgewicht als Schüttgutgewicht ermittelt wird. So wird für jeden Zeitschritt, auch bei Ausgabe eines Störsignals, ein Schüttgutgewicht, ein Schüttgutvolumen und eine Schüttdichte aufgezeichnet. Aus diesen Messwerten lassen sich in weiterer Folge zuverlässig weitere relevante Parameter, wie beispielsweise der Energieverbrauch eines Brechers pro verarbeiteter Tonne Schüttgut ermitteln. In einer besonders bevorzugten Ausführungsform des erfindungsgemäßen Verfahrens werden die korrigierten Messergebnisse markiert, sodass sich die korrigierten Messwerte von den ursprünglichen, fehlerhaften Messwerten unterscheiden lassen.

### Kurze Beschreibung der Erfindung

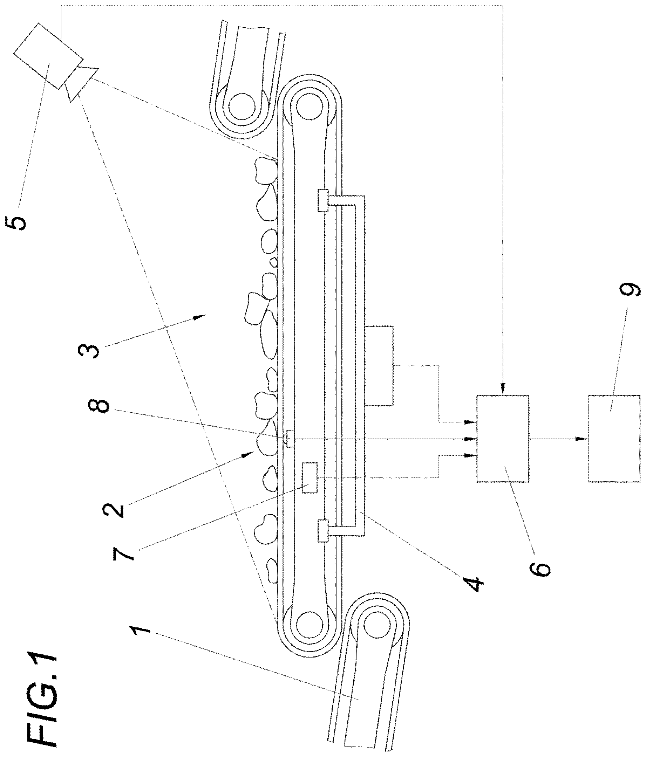

In der Zeichnung ist der Erfindungsgegenstand beispielsweise dargestellt. Es zeigen
- Fig. 1: eine schematische Seitenansicht einer Vorrichtung zur erfindungsgemäßen Durchführung des Verfahrens und
- Fig. 2: ein Flussdiagramm eines Teils des erfindungsgemäßen Verfahrens.

### Wege zur Ausführung der Erfindung

Eine Vorrichtung zur erfindungsgemäßen Durchführung des Verfahrens umfasst ein Förderband 1, welches Schüttgut 2 transportiert. Das Schüttgut 2 eines Förderbandabschnittes 3 wird dabei von einer Waage 4 und einem optischen Abtastsystem 5 vermessen, wobei die Waage 4 das Schüttgutgewicht auf dem Förderbandabschnitt 3 bestimmt und an eine Recheneinheit 6 weiterleitet. Als Waage 4 kann beispielsweise eine Rollenstuhlbandwaage oder in einer besonders bevorzugten Ausführungsform eine Strom-Leistungswaage zum Einsatz kommen. Das optische Abtastsystem 5 vermisst das Schüttgut 2, und sendet die Messdaten ebenfalls an die Recheneinheit 6, die das Volumen des Schüttgutes 2 aus den Messdaten bestimmt. Auf dem Förderband 1 befindet sich zusätzlich Sensoren zur Ermittlung der Messzustandsgrößen, wie beispielweise ein Neigungssensor 7 und ein Geschwindigkeitssensor 8, die Neigung und Geschwindigkeit des Förderbands an die Recheneinheit 6 übermitteln. Zusätzlich können noch Sensoren zur Bestimmung anderer Messzustandsgrößen, wie beispielsweise der Betriebstemperatur und der Lage des Brechers vorhanden sein. Diese können beispielsweise ebenfalls im Gehäuse des Neigungssensors 7 untergebracht sein. Die Recheneinheit 6 ist mit einem Störsignalsender 9 ausgestattet, welches einem Benutzer über Änderungen der Messbedingungen informiert.

Mittels der Recheneinheit 6 wird aus den gemessenen Daten Schüttgutgewicht, Schüttgutvolumen und Schüttdichte bestimmt, wobei zuerst der maximal zulässige Differenzbetrag zwischen Schüttdichte und Schüttdichtenmittelwert und die maximal zulässige Änderung der Messzustandsgrößen am Förderband 1 in der Recheneinheit 6 abgelegt werden.

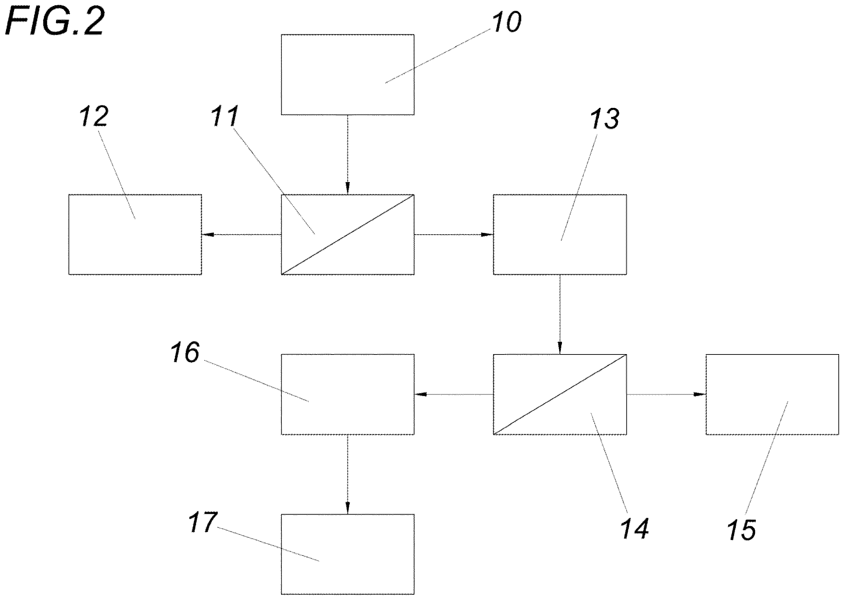

Wie insbesondere der Figur 2 entnommen werden kann, wird zuerst in Schritt 10 für jeden Zeitabschnitt das Schüttgutgewicht, das bestimmte Schüttgutvolumen, sowie die Messzustandsgrößen des Förderbandabschnittes 3 eingelesen, sowie aus Schüttgutgewicht und Schüttgutvolumen die Schüttdichte ermittelt. Zusätzlich wird in diesem Schritt der Schüttdichtenmittelwert aus einer vorgegebenen Anzahl von Schüttdichten vergangener Zeitschritte gebildet.

In Schritt 11 wird überprüft, ob der maximal zulässige Differenzbetrag zwischen Schüttdichte und Schüttdichtenmittelwert überschritten wird.

Ist dies nicht der Fall, folgt Schritt 12, in dem das gemessene Schüttgutgewicht, Schüttgutvolumen und die daraus ermittelte Schüttdichte für diesen Zeitschritt gespeichert werden.

Wird allerdings der maximal zulässige Differenzbetrag zwischen Schüttdichte und Schüttdichtenmittelwert überschritten, folgt Schritt 13, in dem ein Störsignal ausgegeben wird. In Schritt 14 wird anschließend bestimmt, ob die maximal zulässige Änderung der Messzustandsgröße des Förderbandes überschritten wurde.

Ist dies nicht der Fall, folgt Schritt 15, in dem davon ausgegangen wird, dass das optische Abtastsystem 5 für diesen Zeitschritt falsche Werte geliefert hat und die Waage 4 zuverlässige Werte liefert. Das gemessene Schüttgutgewicht wird deshalb für diesen Zeitschritt gespeichert. Das Schüttgutvolumen wird als Quotient des Schüttgutgewichtes und dem in Schritt 10 ermittelten Schüttdichtenmittelwert bestimmt und für diesen Zeitschritt gespeichert. Für diesen Zeitschritt kann die zuletzt gültige Schüttdichte oder der Schüttdichtenmittelwert als Schüttdichte gespeichert werden.

Wird die maximal zulässige Änderung der Messzustandsgröße des Förderbandes überschritten, folgt Schritt 16, in dem davon ausgegangen wird, dass die Waage 4 durch die Änderung der Messzustandsgröße am Förderbandabschnitt 3 falsche Werte geliefert hat und das optische Abtastsystem 5 zuverlässige Werte liefert. Das gemessene Schüttgutvolumen wird deshalb für diesen Zeitschritt gespeichert. Das Schüttgutgewicht wird als Produkt des Schüttgutvolumens und dem in Schritt 10 ermittelten Schüttdichtenmittelwert bestimmt und für diesen Zeitschritt gespeichert. Für diesen Zeitschritt kann die zuletzt gültige Schüttdichte oder der Schüttdichtenmittelwert als Schüttdichte gespeichert werden.

## Patentansprüche

1. Verfahren zur Bestimmung der Schüttdichte von Schüttgut (2) in einem mobilen Brecher wobei das Schüttgutvolumen von auf ein Förderband (1) aufgegebenem Schüttgut (2) bestimmt wird, **dadurch gekennzeichnet, dass** in aufeinanderfolgenden Zeitschritten sowohl das Schüttgutvolumen als auch das Schüttgutgewicht eines Förderbandabschnittes (3) erfasst und aus dem Quotienten des Schüttgutgewichtes und des Schüttgutvolumens die Schüttdichte bestimmt wird.

2. Verfahren nach Anspruch 1, **dadurch gekennzeichnet, dass** aus den Schüttdichten vorangegangener Zeitschritte ein Schüttdichtenmittelwert gebildet wird und dass beim Überschreiten eines Differenzbetrags zwischen Schüttdichte und Schüttdichtenmittelwert ein Störsignal ausgegeben wird.

3. Verfahren nach Anspruch 2, **dadurch gekennzeichnet, dass** für jeden Zeitschritt wenigstens eine Messzustandsgröße des Förderbandes (1) ermittelt und im Falle eines Störsignals bei gegenüber den letzten Zeitschritten abweichender Messzustandsgröße des Förderbandes (1) aus dem Schüttgutvolumen und dem Schüttdichtenmittelwert ein korrigiertes Schüttgutgewicht bestimmt wird.

4. Verfahren nach Anspruch 2 oder 3, **dadurch gekennzeichnet, dass** für jeden Zeitschritt wenigstens eine Messzustandsgröße des Förderbandes (1) ermittelt und im Falle eines Störsignals bei gegenüber den letzten Zeitschritten gleichbleibende Messzustandsgröße des Förderbandes (1) aus dem Schüttgutgewicht und dem Schüttdichtenmittelwert ein korrigiertes Schüttgutvolumen bestimmt wird.

5. Verfahren nach einem der Ansprüche 3 oder 4, **dadurch gekennzeichnet, dass** je Zeitschritt das Schüttgutvolumen und das Schüttgutgewicht aufgezeichnet wird und dass für die Zeitschritte, bei denen ein Störsignal ausgegeben wurde, das korrigierte Schüttgutvolumen als Schüttgutvolumen und/oder das korrigierte Schüttgutgewicht als Schüttgutgewicht ermittelt wird.

## Claims

1. Method for determining the bulk density of bulk material (2) in a mobile crusher, wherein the bulk material volume of bulk material (2) fed onto a conveyor belt (1) is determined, **characterized in that** both the bulk material volume and the bulk material weight of a conveyor belt section (3) are detected in successive time steps and the bulk density is determined from the quotient of the bulk material weight and the bulk material volume.

2. Method according to claim 1, **characterized in that** a bulk density mean value is formed from the bulk densities of preceding time steps, and **in that** a disturbance signal is output when a difference between the bulk density and the bulk density mean value is exceeded.

3. Method according to claim 2, **characterized in that** at least one measurement state variable of the conveyor belt (1) is determined for each time step and, in the case of a disturbance signal, if the measurement state variable of the conveyor belt (1) deviates from the last time steps, a corrected bulk material weight is determined from the bulk material volume and the bulk density mean value.

4. Method according to claim 2 or 3, **characterized in that** at least one measurement state variable of the conveyor belt (1) is determined for each time step and, in the case of a disturbance signal, if the measurement state variable of the conveyor belt (1) remains constant compared to the last time steps, a corrected bulk material volume is determined from the bulk material weight and the bulk density mean value.

5. Method according to one of claims 3 or 4, **characterized in that** the bulk material volume and the bulk material weight are recorded for each time step, and **in that** the corrected bulk material volume is determined as bulk material volume and/or the corrected bulk material weight is determined as bulk material weight for the time steps at which a disturbance signal was output.

## Revendications

1. Procédé permettant de déterminer la masse volumique apparente d'un matériau en vrac (2) dans un concasseur mobile, dans lequel le volume de matériau en vrac (2) délivré sur une bande transporteuse (1) est déterminé, **caractérisé en ce que** le volume du matériau en vrac ainsi que le poids du matériau en vrac d'une section de bande transporteuse (3) sont détectés à des étapes temporelles successives et **en ce que** la masse volumique apparente est déterminée à partir du quotient du poids du matériau en vrac par le volume de matériau en vrac.

2. Procédé selon la revendication 1, **caractérisé en ce qu'**une valeur moyenne de masse volumique apparente de matériau en vrac est établie à partir des masses volumiques apparentes de matériau en vrac des étapes temporelles précédentes et **en ce qu'**un signal parasite est émis en cas de dépassement d'une valeur de différence entre la masse volumique apparente de matériau en vrac et la valeur moyenne de masse volumique apparente de matériau en vrac.

3. Procédé selon la revendication 2, **caractérisé en ce qu'**au moins une grandeur d'état de mesure de la bande transporteuse (1) est déterminée pour chacune des étapes temporelles et, en cas de signal parasite, si la grandeur d'état de mesure de la bande transporteuse (1) diffère de la grandeur d'état de mesure des dernières étapes temporelles, une masse volumique apparente de matériau en vrac corrigée est déterminée à partir du volume de matériau en vrac et de la valeur moyenne de la masse volumique apparente de matériau en vrac.

4. Procédé selon la revendication 2 ou 3, **caractérisé en ce qu'**au moins une grandeur d'état de mesure de la bande transporteuse (1) est déterminée pour chacune des étapes temporelles et, en cas de signal parasite, si la grandeur d'état de mesure de la bande transporteuse (1) reste identique à la grandeur d'état de mesure des dernières étape temporelles, un volume corrigé de matériau en vrac est déterminé à partir de la masse volumique apparente et de la valeur moyenne de la masse volumique apparente.

5. Procédé selon l'une quelconque des revendications 3 ou 4, **caractérisé en ce que** le volume de matériau en vrac et la masse volumique apparente de matériau en vrac sont enregistrés pour chacune des étapes temporelles et **en ce que**, pour les étapes temporelles pour lesquelles un signal parasite a été émis, le volume de matériau en vrac corrigé est déterminé comme étant le volume de matériau en vrac et/ou la masse volumique apparente de matériau en vrac corrigée est déterminée comme étant la masse volumique apparente de matériau en vrac.
